# EUROPEAN PATENT SPECIFICATION

(11) **EP 4 656 357 B1**
(45) Date of publication and mention of the grant of the patent: **11.11.2026**
(21) Application number: 25178392.4
(22) Date of filing: 23.05.2025
(51) Int. Cl.: B29C 65/18, B29C 65/08, B29C 65/36, B29L 31/00

(54) **A PRESSURE ROLLER OF A ROLL-FED PACKAGING MACHINE**
DRUCKROLLE EINER ROLLENGESPEISTEN VERPACKUNGSMASCHINE
ROULEAU DE PRESSION D'UNE MACHINE D'EMBALLAGE ALIMENTÉE PAR ROULEAU

(30) Priority: 31.05.2024 IT 202400012487
(43) Date of publication of application: 03.12.2025
(73) Proprietor: Tetra Laval Holdings & Finance S.A., 1009 Pully (CH)
(72) Inventor: ROSSI, Silvia, 41123 Modena (IT); NATOLI, Alessio, 41123 Modena (IT)
(74) Representative: Tetra Pak Patent Attorneys

(56) References cited:
- WO-A1-2009/144168
- US-A1- 2006 090 839

## Description

### Technical field

The herein disclosed technology relates to the field of packaging technology. More particularly, it is related to a pressure roller of a roll-fed packaging machine.

### Background of the invention

Roll-fed packaging machines has for many years been widely used within the food packaging industry for producing sealed packages of food product from a web of carton-based packaging material. The packaging material is more specifically a laminate packaging material, designed to combine the structural integrity of paperboard with the protective properties of plastic, and sometimes also aluminum.

In a roll-fed packaging machine (or system), the packages are produced by forming a longitudinal sealing along an overlap between two ends of the web of packaging material, such that a tube is formed, filling the tube with the food product, and thereafter forming packages from the tube by making transversal sealings at a respective end of the tube.

Forming the longitudinal sealing is traditionally done by providing a longitudinal sealing strip along the overlap section between the two ends, and applying heat and pressure along said section, so the two ends are sealed together. The pressure is typically applied by a pressure roller arranged on the inside of the tube, which presses against a counter-pressure roller arranged on the outside of the tube.

US 2006/090839 A1 describes an apparatus for heat sealing together two film portions at selected areas to form a heat seal pattern while a remainder of the film remains unsealed, the apparatus comprising a rotatable, heated sealing roller.

WO 2009/144168 A1 describes a packaging machine for producing sealed packages of a food product from a web of packaging material, said machine comprising at least one pressure roller.

To ensure that the longitudinal sealing is made properly, present solutions for forming the longitudinal sealing usually require a high pressure to ensure a proper seal. An issue that can occur due to the high pressure, and high heat environment is delamination of the packaging material. Delamination refers to the separation of layers of the laminate packaging material. More specifically, pieces of the packaging material can stick to the pressure roller and be torn off. The sticking of packaging material to the rollers can be caused by several factors, including the properties of the material of the roller, and the presence of residues or contaminants on the rollers or the packaging material itself. For example, when residues are present, the packaging material is subjected to uneven and locally higher pressure, leading to the peeling or separation of its layers.

Delamination not only reduces the efficacy of the packaging process but also leads to machine downtime and increased waste, as delaminated materials often cannot be used and must be discarded. Additionally, it can compromise its structural integrity and protective properties. Moreover, delamination can result in product contamination if the integrity of the packaging is compromised, or if residues fall into the product, which can affect customer satisfaction, and sterility of the product. There is therefore a need for new and improved solutions for reducing the risk of delamination in roll-fed packaging machines.

### Summary of the invention

The herein disclosed technology seeks to at least partly mitigate, alleviate or eliminate one or more of the above-mentioned deficiencies and disadvantages in the prior art. In particular, it is an object to provide a pressure roller which reduces the risk of delamination of packaging material during the longitudinal sealing process, and other related aspects. The disclosed technology further relates to a method for producing such a pressure roller.

As stated above, an issue during the longitudinal sealing process in a roll fed packaging machine is packaging material delamination caused by the pressure roller. Such package material delamination may be the effect of that parts of the inside of the packaging material stick to the pressure roller and once the pressure roller is moved away from the packaging material, these pieces are torn off. More particularly, the delamination can e.g. occur due to bonds being created between the pressure roller and the packaging material during stops of the machine. Different materials of the pressure roller have been tested, without the desired results, as it typically leads to increased cost, reduced sealing performance, or simply just not enough improvements in terms of reducing the risk of delamination.

For these reasons, it is desirable to keep the current roller material, and its elastic properties. One reason for this is that these elastic properties may be closely linked to the longitudinal sealing process in that these properties provide for a sufficient sealing without damaging or in any other way negatively affecting the packaging material, e.g. forming cracks in an Aluminum foil layer of the packaging material. At the same time, the surface properties of the roller preferably work well with the inside layer(s) of the packaging material to reduce the risk of delamination. To this regard, the inventors proposes a solution which both reduces the risk of delamination, while maintaining the desired sealing properties of the pressure roller. More specifically, the disclosed technology is based on the application of an adhesion reducing coating. It is however not a straightforward task of finding what coating material to use, as it has to withstand the working conditions of the pressure roller, including high temperatures, high speeds, high pressure, and mechanical wear. Otherwise, there is a risk of the bond between the coating and substrate (i.e. the roller body) breaking down, and the coating thus wearing off too quickly. For example, it is desirable for the coating to have a lifetime at least similar to (or higher than) the lifetime of the pressure roller, which can be affected by mechanical wear. As realized by the inventors, the use of a ceramic nanocoating on the pressure roller has been found to reduce the risk of delamination, maintain the elastic properties of the pressure roller while achieving a desirable lifetime, as well as being able to withstand the harsh operating conditions of the pressure roller. Even more advantageously, the disclosed technology can also improve the overall lifetime of the pressure roller by increasing its wear resistance.

Various aspects and embodiments of the disclosed technology are defined below and in the accompanying independent and dependent claims.

According to a first aspect, there is provided a pressure roller of a roll-fed food packaging machine. The pressure roller is a pressure roller for applying pressure along a longitudinal sealing section on an inside of a tube of a laminate carton-based packaging material. The pressure roller comprises a roller body made of an elastically deformable material. An outer surface of the roller body is provided with an adhesion reducing coating. The adhesion reducing coating is a ceramic nanocoating comprising ceramic nanoparticles. During use, a risk of delamination of the packaging material can be reduced.

A possible associated advantage is that the risk of delamination during the longitudinal sealing process can be reduced, and also the buildup of residue on the pressure rollers.

A further possible associated advantage is that it provides a cost-efficient solution as current pressure rollers can be used, after application of the adhesion reducing coating, meaning no replacement of parts.

A further possible associated advantage is that it can increase the lifetime of the pressure rollers by protecting against wear, leaning to less downtime and cost due to less frequent replacements. In particular, the proposed coating can reduce the wear on the roller and prevent pieces of the roller from sticking to the packaging material and being torn off.

In some embodiments, the adhesion reducing coating has an adhesion energy between 0.1 and 0.3 N/mm.

A possible associated advantage is that this provides a good anti-sticking property of the roller, while still offering a wear resistant coating.

In some embodiments, the adhesion reducing coating has a thickness between 100 µm and 150 µm.

In some embodiments, the adhesion reducing coating is a hydrophobic coating. Due to its hydrophobic properties, the pressure roller may be cleaned easier, as the food product has less tendency to remain on the roller.

In some embodiments, the elastically deformable material of the roller body is any one of rubber, silicone, and elastomer. The ceramic nanocoating provided on such materials has shown to be particularly advantageous in terms of wear resistance (i.e. coating is resistant to deterioration during use).

In some embodiments, the elastically deformable material has an elastic modulus between 2.4 and 2.8 MPa.

In some embodiments, the elastically deformable material has a hardness between 35 and 50 ShA.

In some embodiments, the pressure roller is operable in temperatures up to 150°C. Moreover, the pressure roller may be operable in temperatures above 80°C.

In some embodiments, the pressure roller is operable at feeding speeds of the tube between 1-2 m/s.

With this first aspect of the disclosed technology, similar advantages and preferred features are present as in the other aspects.

According to a second aspect, there is provided a roller arrangement, of a roll-fed food packaging machine, for applying pressure along a longitudinal sealing section of a tube of a laminate carton-based packaging material. The roller arrangement comprises the pressure roller according to any embodiments of the first aspect. The roller arrangement further comprises a counter-pressure roller. The counter-pressure roller is arranged opposite to the pressure roller. The pressure roller is configured to press against said counter-pressure roller to thereby apply a pressure along the longitudinal sealing section of the tube of packaging material being fed therebetween.

In some embodiments, the counter-pressure roller comprises a roller body made of a rigid material.

With this second aspect of the disclosed technology, similar advantages and preferred features are present as in the other aspects.

According to a third aspect, there is provided a longitudinal sealing device, of a roll-fed food packaging machine, for sealing a longitudinal sealing section of a tube, formed from a web of laminate carton-based packaging material. The longitudinal sealing section comprises an overlap section between a first and a second edge section of the web, and a sealing strip applied along said overlap section. The longitudinal sealing device comprises the roller arrangement according to any embodiment of the second aspect. In use, the counter-pressure roller is located on an outside of said tube, and the pressure roller is located on an inside of said tube. In use, the pressure roller is configured to press against said counter-pressure roller to thereby apply pressure along the longitudinal sealing section of the tube fed between the pressure roller and the counter-pressure roller, such that the overlap section between the first and second edge section of the web, and the sealing strip are sealed together.

In some embodiments, the roller arrangement is a first roller arrangement. The longitudinal sealing device then further comprises a second roller arrangement according to any embodiment of the second aspect. The second roller arrangement being arranged downstream of the first roller arrangement.

With this third aspect of the disclosed technology, similar advantages and preferred features are present as in the other aspects.

According to a fourth aspect, there is provided a roll-fed packaging machine for producing sealed packages of a food product from a web of laminate carton-based packaging material. The roll-fed packaging machine comprises the longitudinal sealing device according to any embodiment of the third aspect.

With this fourth aspect of the disclosed technology, similar advantages and preferred features are present as in the other aspects.

According to a fifth aspect, there is provided a method for producing a pressure roller, of a roll-fed food packaging machine, for applying pressure along a longitudinal sealing section of a tube of a laminate carton-based packaging material. The method comprises providing a roller body made of an elastically deformable material. The method further comprises (i) depositing a layer of an adhesion reducing coating by spraying a coating composition on the roller body, wherein the adhesion reducing coating is a ceramic nanocoating comprising ceramic nanoparticles. The method further comprises (ii) curing the roller body for a period of time. The method further comprising repeating steps (i) to (ii) at least one time.

A possible associated advantage is that this provides good balance between a coating which lasts (i.e. having low deterioration over time), while offering good anti-sticking properties. The application of several layers and curing therebetween can further achieve cross-linkage between the adhesion reducing coating and the substrate (i.e. the roller body) that it's applied to. Moreover, it enables an easy way of producing the rollers. It can be applied to current pressure rollers, thus not requiring a need for obtaining new parts.

With this fifth aspect of the disclosed technology, similar advantages and preferred features are present as in the other aspects.

According to a sixth aspect, there is provided a pressure roller produced by the process according to the fifth aspect.

With this sixth aspect of the disclosed technology, similar advantages and preferred features are present as in the other aspects.

These and other features and advantages of the disclosed technology will in the following be further clarified with reference to the embodiments described hereinafter.

The disclosed aspects and preferred embodiments may be suitably combined with each other in any manner apparent to anyone of ordinary skill in the art, such that one or more features or embodiments disclosed in relation to one aspect may also be considered to be disclosed in relation to another aspect or embodiment of another aspect.

Further embodiments are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

### Brief description of the drawings

The above and other aspects of the present inventive concept will now be described in more detail, with reference to appended drawings showing variants of the present inventive concept. The figures should not be considered limiting the invention to the specific variant; instead, they are used for explaining and understanding the inventive concept.

As illustrated in the figures, the sizes of layers and regions are exaggerated for illustrative purposes and, thus, are provided to illustrate the general structures of variants of the present inventive concept. Like reference numerals refer to like elements throughout.
Figure 1 is a general illustration of a roll-fed packaging machine, in accordance with some embodiments.
Figure 2 illustrates, by way of example, a longitudinal sealing device, in accordance with some embodiments.
Figure 3A illustrates, by way of example, a pressure roller in perspective view, in accordance with some embodiments.
Figure 3B illustrates, by way of example, a pressure roller in cross-sectional view, in accordance with some embodiments.
Figure 4 schematically illustrates a roller arrangement in side view, in accordance with some embodiments.
Figure 5 is a schematic flowchart representation of a method in accordance with some embodiments.

### Detailed description

The herein disclosed technology will now be described in detail with reference to the accompanying drawings, in which some example embodiments of the disclosed technology are shown. The disclosed technology may, however, be embodied in other forms and should not be construed as limited to the disclosed example embodiments. The disclosed example embodiments are provided to fully convey the scope of the disclosed technology to the skilled person.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative.

It will also be understood that, although the term first, second, etc. may be used herein to describe various elements or features, these elements should not be limited by these terms. These terms are only used to distinguish one element from another. For example, a first element could be termed a second element, and, similarly, a second element could be termed a first element, without departing from the scope of the embodiments. The first element and the second element are both elements, but they are not the same element.

As used herein, the wording "one or more of" or "any one of" a set of elements (as in "one or more of A, B and C" or "at least one of A, B and C") is to be interpreted as either a conjunctive or disjunctive logic. Put differently, it may refer either to all elements, one element or combination of two or more elements of a set of elements. For example, the wording "one or more of A, B and C" may be interpreted as A or B or C, A and B and C, A and B, B and C, or A and C.

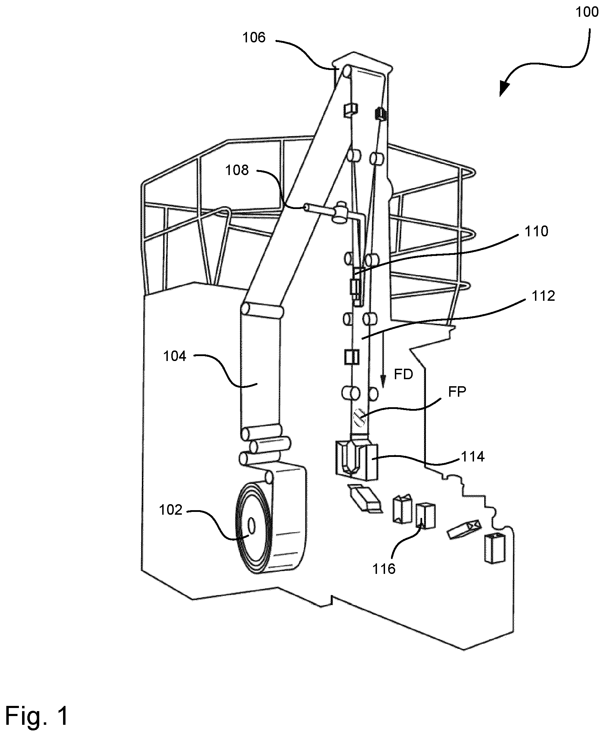

A pressure roller, a roller arrangement comprising said pressure roller, a longitudinal sealing device comprising said roller arrangement, a packaging machine comprising said longitudinal sealing device, as well as a method for producing said pressure roller, will now be described with reference to Fig. 1 to 5.

Figure 1 is a general illustration of a roll-fed packaging machine 100 (or just packaging machine 100). The packaging machine 100 may be a stand-alone packaging machine, or part of a larger food packaging or processing pipeline.

The packaging machine 100 is configured to produce sealed packages of a food product from a web of packaging material. The packaging material being a laminate carton-based packaging material. By the wording "laminate" it is herein meant that the packaging material is a multilayer packaging material. More specifically, the packaging material may comprise a paperboard layer and one or more protective layer(s). The protective layer(s) may e.g. be plastic layer(s) (or foil(s)). The protective layer(s) may be attached to the paper board layer. For example, one or more protective layers may be provided on the side of the packaging material facing the inside of the package to be formed. Additionally, one or more protective layers may be provided on the side of the packaging material facing the outside of the package. The packaging material may further comprise a light-shielding layer. The light shielding layer may e.g. be an aluminum layer (or foil).

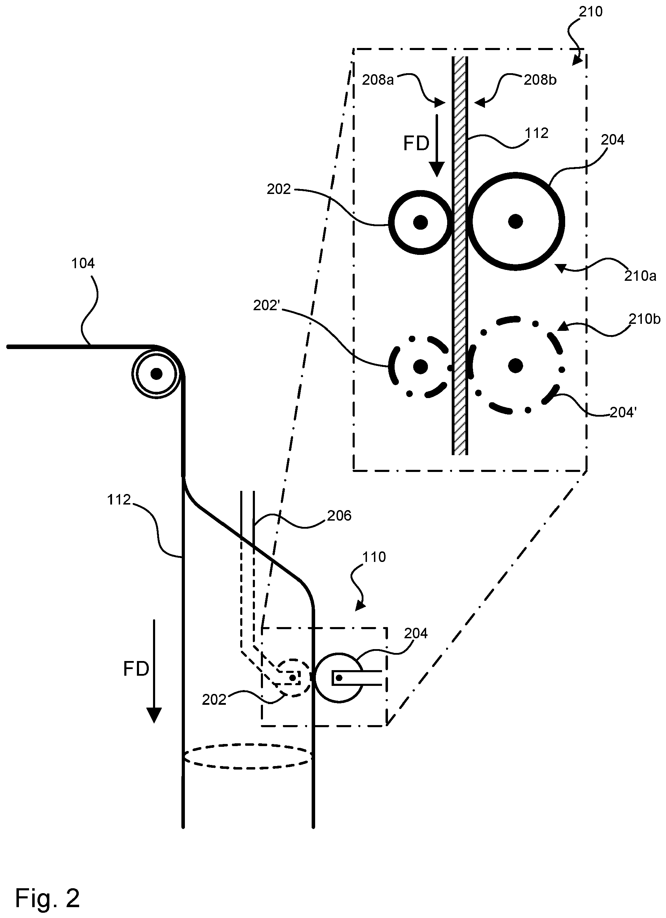

In the broadest form, the packaging machine 100 comprises a longitudinal sealing device 110. The longitudinal sealing device 110 is configured to form a longitudinal sealing of a tube formed by the web of packaging material. The longitudinal sealing device 110 is further described below, in connection with Fig. 2.

As stated above, the packaging machine 100 is a roll-fed packaging machine, the general principles of which will be described in the following, by way of example. In such a machine, the packaging material is provided on a roll (or reel) 102 of packaging material. The reel 102 of packaging material may be loaded into a reel receiver (not shown) of the packaging machine 100. From the roll 102 of packaging material, a web 104 of packaging material is formed. The web 104 of packaging material may pass through a sterilization station 106 for removing or reducing a number of unwanted microorganisms from the web 104. The sterilization station 106 may e.g. comprise a hydrogen peroxide bath, a Low Voltage Electron Beam (LVEB) device or any other suitable equipment capable of meeting food safety regulations.

After sterilization, the web 104 is formed into a tube 112, e.g. by the longitudinal sealing device 110 (or longitudinal sealing station). The tube 112 is formed by joining the two edges (or edge sections) of the web 104 by a longitudinal sealing. The wording "longitudinal" herein refers to the longitudinal direction of the web 104 or tube 112 of packaging material. Thus, the longitudinal direction coincides with a feeding direction, FD, in the packaging machine 100. When having formed the tube 112, a food product, FP, can be fed into the tube 112 via a product filling pipe 108, arranged at least partly inside the tube 112.

The filled tube 112 then reaches a transversal sealing station 114. The wording "transversal" herein relates to a direction across the tube (i.e. a transversal direction, TD) once flattened in the transversal sealing station 114. In the transversal sealing station 114, a transversal sealing is made in a lower end of the tube, e.g. by using an ultrasonic sealing system, or an induction heating sealing system (not shown). Generally, the transversal sealing system has two main functions; 1) providing the transversal sealing, i.e. welding two opposite sides of the tube 112 together such that the product in a lower part of the tube 112, placed downward the transversal sealing system, is separated from the product in the tube 112 placed upward the transversal sealing system, and 2) cutting off the lower part of the tube such that a package 116 is formed. Alternatively, instead of providing the transversal sealing and cutting off the lower part in one and the same system, the step of cutting off the lower part may be made in a subsequent step by a different piece of equipment, or by the consumer if the packages are intended to be sold in a multi-pack.

After a package 116 has been formed, it may be folded in a folding station (not shown) to form a finished food package 116.

Figure 2 illustrates, by way of example, a longitudinal sealing device 110, in accordance with some embodiments. More specifically, Fig. 2 shows a cross-sectional schematic view of the longitudinal sealing device 100 and tube 112 formed by the web 104 of packaging material. As explained above, the longitudinal sealing device 110 is configured to seal a longitudinal sealing section of the tube 112 of packaging material. The tube 112 may be formed from the web 104 of packaging material by a tube forming device (not shown). The tube forming device may form part of the longitudinal sealing device 110, or as a separate device or equipment arranged upstream from the longitudinal sealing device 110. In the latter case, the longitudinal sealing device 110 is fed the formed tube 112 of packaging material.

The tube 112 is formed by folding a first edge section of the web 104 over a second edge section of the web. Thereby, an overlap section between the first and second edge section are formed. The first and second edge section are to be understood as two opposite ends of the same web of packaging material, such that when put together they form an enclosed tubular body. The longitudinal sealing section herein refers to a section of the tube 112 that is to be sealed. More specifically, the longitudinal sealing section comprises the overlap section between the first and the second edge section of the web. Moreover, the longitudinal sealing section comprises a sealing strip applied along said overlap section. The sealing strip is provided along the overlap section on the inside of the tube 112. The sealing strip serves the purpose of protecting an inner end of the packaging material from coming in contact with the food product held therein. The sealing strip thus creates a barrier between the food product and the paperboard layer of the packaging material.

Moving on, the longitudinal sealing device 110 comprises a roller arrangement 210. In short, the roller arrangement 210 comprises a pressure roller 202 and a counter-pressure roller 204. The pressure roller 202 and the counter-pressure roller 204 are arranged opposite each other, as seen from the longitudinal sealing section of the tube 112 which is fed between the rollers during use (as seen e.g. in the zoomed-in portion of Fig. 2). Put differently, the pressure roller 202 and the counter-pressure roller 204 are arranged on opposite sides of the packaging material to be sealed. More specifically, the counter pressure roller 204 is located on an outside 208b of the tube 112 during use, while the pressure roller 202 is located on an inside 208a of the tube 112.

During use, the pressure roller 202 is configured to press against said counter-pressure roller 204 to thereby apply pressure along the longitudinal sealing section of the tube 112 fed between the pressure roller 202 and the counter-pressure roller 204. Thereby, the overlap section between the first and second edge section of the web, and the sealing strip can be sealed together. The pressure roller 202 may be connected to a pressure arrangement 206 for suppling said pressure. The pressure arrangement 206 may e.g. comprise a spring mechanism for achieving said pressure.

The longitudinal sealing device 110 may be further configured to heat the longitudinal sealing section, to allow plastic layers of the packaging material, as well as the sealing strip, to at least partly melt. Thereby, the plastic layers and sealing strip can bond together to form the seal.

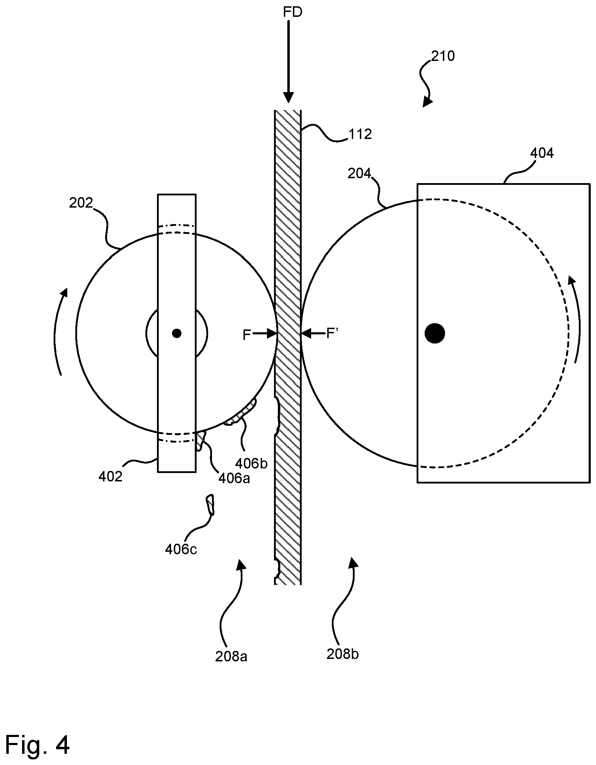

In some embodiments, the longitudinal sealing device 110 comprise a first roller arrangement 210a, and a second roller arrangement 210b. The first and second roller arrangement 210a, 210b may thus refer to two separate instances of the roller arrangement 210 described above. The second roller arrangement 210b is in Fig. 2 illustrated as the optional further roller arrangement (shown in dash-dot lines). The optional second roller arrangement (shown in dash-dot lines) comprises a further pressure roller 202' and a further counter-pressure roller 204'. The principles of the roller arrangement 210, as described above, apply to both the first and second roller arrangement 210a, 210b. The second roller arrangement 210b is arranged downstream of the first roller arrangement 210a (i.e. as seen along the feeding direction FD). The roller arrangement 210 will be further described below in connection with Fig. 4.

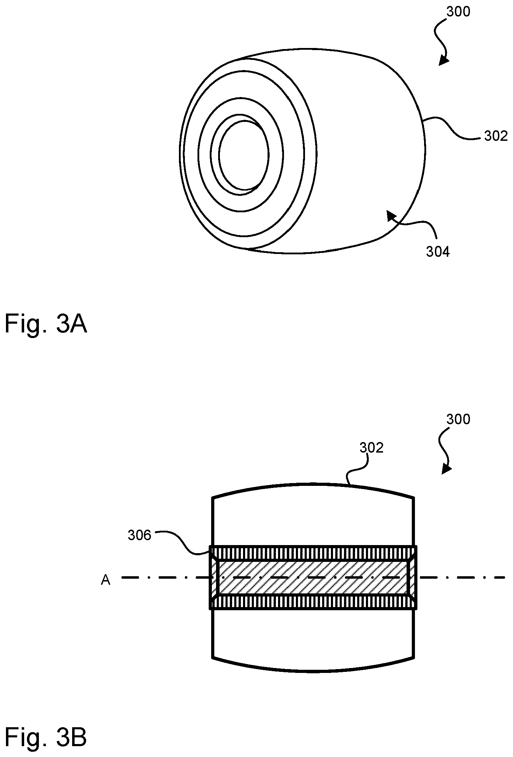

Figure 3A illustrates, by way of example, a pressure roller 300 in perspective view, in accordance with some embodiments. Figure 3B illustrates, the pressure roller 300 in cross-sectional view along a central axis A.

The pressure roller 300 described herein, is an example of the pressure roller 202 (and the further pressure roller 202') as described above in connection with Fig. 2. Any features and aspects of the pressure roller 202, 202' described above, is therefore applicable also to the pressure roller 300 described herein, and vice versa.

The pressure roller 300 comprises a roller body 302. As seen in Fig. 3B, the pressure roller 300 may have a convex shape. It is however to be appreciated that the pressure roller may, in some embodiments, have a cylindrical shape.

The pressure roller 300 may further comprise an inner hub 306. The inner hub 306 may be bearings for allowing the pressure roller 300 to rotate around its central axis A.

The roller body 302 is made of an elastically deformable material. The elastic properties of the pressure roller 300 is important for several reasons. For example, the elastically deformable material allows the pressure roller 300 to conform to the surface of the packaging material, accommodating slight variations in thickness, and ensuring consistent contact across the entire longitudinal sealing section. In particular for compensating for the asymmetry of the overlap section due to the overlapping edge sections of the web of packaging material. This is important for creating a uniform seal without gaps or weak spots. Moreover, it allows for distributing pressure more evenly across the longitudinal sealing section. This helps in achieving a consistent seal by accommodating minor surface irregularities and ensuring that the sealing material is adequately compressed. In addition, the elasticity can help in absorbing shocks and vibrations that may occur due to the high-speed operation of the machine, to help reduce damages to the packaging material.

The roller body 302 may be made of any suitable elastomer. For example, the roller body 302 may be made of rubber, silicon, or a combination thereof.

In some embodiments, the elastically deformable material has an elastic modulus between 2 and 3 MPa. More specifically, the elastically deformable material may have an elastic modulus between 2.4 and 2.8 MPa.

Moreover, the elastically deformable material may have a hardness between 25 and 60 Shore A hardness (ShA). More specifically, the elastically deformable material may have a hardness between 35 and 50 ShA.

As mentioned above, the pressure roller 300 is coated with an adhesion reducing coating. More specifically, an outer surface 304 of the roller body 302 is provided with an adhesion reducing (or anti-stick) coating. By the wording "provided with" as in "provided with an adhesion reducing coating", it is herein meant that the roller body 302 comprises or has an adhesion reducing coating. The adhesion reducing coating (may also be referred to as "coating for adhesion reduction") is a ceramic nanocoating. More specifically, the adhesion reducing coating may be a so-called sol-gel coating.

In the present context, the term "nano" refers to the nanoscale dimensions of the particles that make up the coating. Ceramic nanocoatings are thus composed of ceramic particles that are in the order of nanometers in size which imparts unique and enhanced properties compared to conventional ceramic coatings. In other words, the ceramic nanocoatings of the invention comprise ceramic nanoparticles.

Ceramic nanocoatings, such as sol-gel, has not previously been applied to elastically deformable materials, such as rubber, silicone, and elastomers. Particularly not in food packaging applications. They can offer high hardness, toughness, and wear and temperature resistance. But perhaps most importantly, the inventors have found them to achieve positive effects on the inherent adhesive properties of the elastically deformable materials. Moreover, the sol-gel may be a sol-gel that is free of any per- and polyfluoroalkyl substances (PFAS).

The adhesion reducing coating may have an adhesion energy between 0.05 and 0.4 N/mm. More specifically, the adhesion reducing coating may have an adhesion energy between 0.1 and 0.3 N/mm.

The adhesion reducing coating may be provided on the roller body 302 in 1 to 5 layers. More specifically, the adhesion reducing coating may be provided on the roller body 302 in 2 to 4 layers. More specifically, the adhesion reducing coating may be provided on the roller body 302 in three layers. The adhesion reducing coating may have a thickness between 50 and 200 µm. More specifically, the adhesion reducing coating may have a thickness between 100 and 150 µm.

The adhesion reducing coating may be a hydrophobic coating. In other words, the adhesion reducing coating may have hydrophobic properties. The adhesion reducing coating may have a water contact angle above 90 degrees. More specifically, the adhesion reducing coating may have a water contact angle above 110 degrees. More specifically, the adhesion reducing coating may have a water contact angle about 115 degrees.

The herein proposed adhesion reducing coating is capable of withstanding (or resisting) the operating conditions of the pressure roller 300. In particular, the pressure roller 300 may be operable (i.e. configured to operate) in temperatures up to 150°C. Moreover, the pressure roller 300 may be operable in temperatures above 80°C. In addition, the pressure roller 300 may be operable at feeding speeds of the tube between 1 and 2 m/s. Put differently, the tube 112 may be fed through the roller arrangement 210 at a speed in the range of 1-2 m/s. The pressure used for forming the longitudinal sealing is typically in the order of 1-2 MPa. The pressure roller 300, and consequently also the adhesion reducing coating, therefore should withstand also this pressure levels. Furthermore, depending on the sterilization method used, the pressure roller 300 and the coating thereof, has to withstand electron beam radiations at irradiation dosages in the order of 25kGy, or hydrogen peroxide vapors. Lastly, the adhesion reducing coating preferably have high mechanical wear resistance, e.g. against sliding of the packaging material.

By having the roller body 302 provided with the adhesion reducing coating, a risk of delamination of the packaging material can be reduced. Moreover, a risk of residues of the packaging material being introduced into the food product held within the package can be reduced.

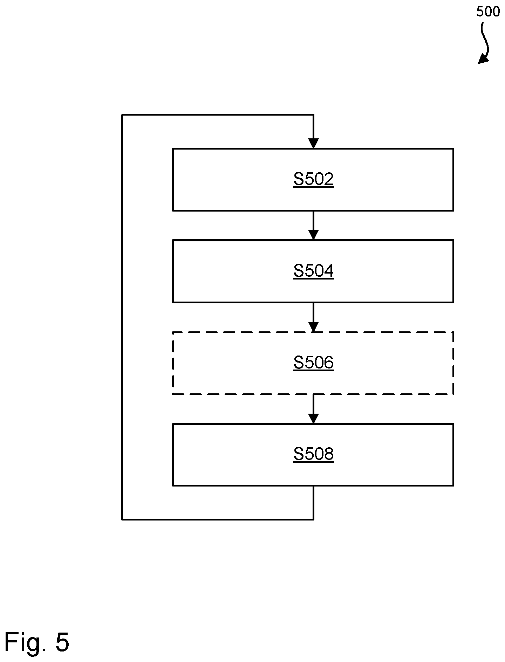

The proposed technology thus enables a solution in which the elastic properties of the pressure roller can be maintained, while reducing the inherent adhesive properties of the roller material. Despite the elasticity and working conditions of the roller, the adhesion reducing coating can still be made wear resistant, partly due to a cross-linkage being achieved between the coating and the roller body 302. The crosslinking can be an effect of the selection and interaction of the roller material and coating material, as well as the proposed application process, as further described below in connection with Fig. 5.

Figure 4 schematically illustrates a roller arrangement 210 in side view, in accordance with some embodiments. More specifically, Fig. 4 illustrates the problem of delamination of the packaging material, which the herein disclosed technology sets out to at least partly solve.

A cross-section of a wall of the tube 112 of packaging material, fed between the roller arrangement 210, is shown. The packaging material is fed along the feeding direction FD, from top to bottom in the image plane. As explained in the forgoing, the pressure roller 202 is arranged on the inside 208a of the tube 112. The counter-pressure roller 204 is arranged on the outside 208b, opposite the pressure roller 204.

The pressure roller 202 is, as explained above, made of an elastically deformable material. In contrast, the counter-pressure roller 204 may be made of a rigid material. Having a rigid counter-pressure roller offers support and stability in the form of a firm backing against which the elastically deformable pressure roller can press the packaging material. The counter-pressure roller can be rotatably attached to a counter-pressure roller holder 404 for holding the counter-pressure roller 204 in place, in order to offer this support. Together, the elastically deformable pressure roller and the rigid counter pressure roller create an effective sealing mechanism. The pressure roller adapts to the packaging material, ensuring consistent pressure and contact, while the counter-pressure roller provides the necessary support to form a sufficient seal. This combination ensures that the sealing process is efficient, reliable, and capable of handling the demands of high-speed packaging operations.

The pressure roller exerts a force F (or pressure) in a direction perpendicular to the feeding direction, FD, and a central rotational axis A of the pressure roller. The counter-pressure roller, which is fixedly attached in the direction of the applied force thus generates a counter-force F' in the opposite direction. The longitudinal sealing section fed between the pressure roller and the counter-pressure roller thereby experiences a pressure for forming the longitudinal sealing.

As the pressure roller 202 is arranged on the inside, it is of particular importance that the risk of delamination is reduced. In the illustrated example, residues 406a, 406b, 406c of the packaging material (e.g. parts of polyethylene of the plastic layer(s)) being torn off, can stick to the pressure roller 202. These residues can pile up on the pressure roller, or against a pressure roller holder 402 to which the pressure roller is attached. Apart from affecting the integrity of the packaging material due to its damages, residues 406a, 406b, 406c on the pressure roller 202 can affect the sealing performance of the pressure roller 202 for subsequent packages, as well as falling into the food product, thereby affecting e.g. customer satisfaction or the sterility of the product. This problem can be mitigated by the herein disclosed technology.

Figure 5 is a schematic flowchart representation of a method 500 in accordance with some embodiments. More specifically, it is a method 500 for producing a pressure roller used in the longitudinal sealing process of a roll-fed packaging machine. Put differently, the method 500 can be described as a method for applying an adhesive reducing coating to a pressure roller. The pressure roller may be the pressure roller as described above in connection with Fig. 1 to 4. Thus, any aspects and principles described in the forgoing, are applicable also to the method 500 and pressure roller obtained by said method.

Below, the different steps of the method 500 are described in more detail. Even though illustrated in a specific order, the steps of the method 500 may be performed in any suitable order as well as multiple times. Thus, although Fig. 5 may show a specific order of method steps, the order of the steps may differ from what is depicted. In addition, two or more steps may be performed concurrently or with partial concurrence. Such variation will depend on a specific realization. All such variations are within the scope of the invention. Further variants of the method 500 will become apparent from the present disclosure. The herein described embodiments are only given as examples and should not be limiting to the present invention. Other solutions, uses, objectives, and functions within the scope of the invention as claimed below described patent claims should be apparent for the person skilled in the art. It should be appreciated that the steps which are comprised in dashed lines in Fig. 5 are examples of optional steps which may form part of a number of alternative embodiments. The optional steps need not be performed in order. Furthermore, it should be appreciated that not all of the optional steps need to be performed.

The method 500 comprises providing S502 a roller body made of an elastically deformable material. The elastically deformable material may e.g. be rubber, silicone, or elastomer.

Optionally, the method 500 comprises pre-treating the roller body by cleaning the roller body with ethanol.

The method 500 further comprises depositing S504 a layer of an adhesion reducing coating by spraying a coating composition on the roller body. The coating composition comprising said adhesion reducing coating. The adhesion reducing coating may be a ceramic nanocoating. The coating composition may thus be understood as a composition of ceramic nanoparticles suspended in a solution. The coating composition may thus be understood as a coating liquid product before its application on a surface.

The coating composition may be sprayed onto the roller body by a high-volume low pressure (HVLP) spray gun. A nozzle tip size of the spray gun may be 0.0 to 1.3 mm. A pressure of the spray gun may be in the range of 1.7 to 2.3 bar. More specifically, the pressure may be about 2 bar. The spray gun may be held at a distance between 8 and 12 cm from the roller body. Put differently, the roller body may be sprayed from a distance of 8 to 12 cm.

Optionally, the method 500 may comprise removing S506 excess coating composition from the roller body.

The method 500 further comprises curing S508 the roller body for a period of time. The period of time may be at least 24 hours. The period of time may be at least 48 hours.

The method 500 further comprises repeating steps denoted S504 and S508 at least one time. In some embodiments, the steps denoted S504 and S508 are repeated two times. Thus, three layers of the adhesion reducing coating may be deposited on the roller body. The optional step of removing S506 excess coating from the roller body may also be repeated one or more times.

According to some embodiments, a pressure roller produced according to the method 500 described herein, is provided.

Additionally, variations to the disclosed variants can be understood and effected by the skilled person in practicing the claimed invention, from a study of the drawings, the disclosure, and the appended claims.

## Claims

1. A pressure roller (300), of a roll-fed food packaging machine (100), for applying pressure along a longitudinal sealing section on an inside of a tube (112) of a laminate carton-based packaging material, the pressure roller (300) comprising:
a roller body (302) made of an elastically deformable material;
wherein an outer surface (304) of the roller body (302) is provided with an adhesion reducing coating, the adhesion reducing coating being a ceramic nanocoating comprising ceramic nanoparticles, such that, during use, a risk of delamination of the packaging material is reduced.

2. The pressure roller (300) according to claim 1, wherein the adhesion reducing coating has an adhesion energy between 0.1 and 0.3 N/mm.

3. The pressure roller (300) according to claim 1 or 2, wherein the adhesion reducing coating has a thickness between 100 µm and 150 µm.

4. The pressure roller (300) according to any one or the claims 1 to 3, wherein the adhesion reducing coating is a hydrophobic coating.

5. The pressure roller (300) according to any one of the claims 1 to 4, wherein the elastically deformable material of the roller body (302) is any one of rubber, silicone, and elastomer.

6. The pressure roller (300) according to any one of the claims 1 to 5, wherein the elastically deformable material has an elastic modulus between 2.4 and 2.8 MPa.

7. The pressure roller (300) according to any one of the claims 1 to 6, wherein the elastically deformable material has a hardness between 35 and 50 ShA.

8. The pressure roller (300) according to any one of the claims 1 to 7, wherein the pressure roller (300) is operable in temperatures up to 150°C.

9. The pressure roller (300) according to any one of the claims 1 to 8, wherein the pressure roller (300) is operable at feeding speeds of the tube between 1-2 m/s.

10. A roller arrangement (210), of a roll-fed food packaging machine (100), for applying pressure along a longitudinal sealing section of a tube (112) of a laminate carton-based packaging material, the roller arrangement (210) comprising:
the pressure roller (202, 300) according to any one of the claims 1 to 9, and
a counter-pressure roller (204), arranged opposite to the pressure roller (202, 300),
wherein the pressure roller (202, 300) is configured to press against said counter-pressure roller (204) to thereby apply a pressure along the longitudinal sealing section of the tube of packaging material being fed therebetween.

11. The roller arrangement (210) according to claim 10, wherein the counter-pressure roller (204) comprises a roller body made of a rigid material.

12. A longitudinal sealing device (110), of a roll-fed food packaging machine (100), for sealing a longitudinal sealing section of a tube (112), formed from a web of laminate carton-based packaging material, wherein the longitudinal sealing section comprises an overlap section between a first and a second edge section of the web, and a sealing strip applied along said overlap section, the longitudinal sealing device (110) comprising:
the roller arrangement (210) according to claim 10 or 11;
wherein, in use, the counter-pressure roller (204) is located on an outside (208b) of said tube (112), and the pressure roller (202) is located on an inside (208a) of said tube (112);
wherein, in use, the pressure roller (202) is configured to press against said counter-pressure roller (204) to thereby apply pressure along the longitudinal sealing section of the tube fed between the pressure roller (202) and the counter-pressure roller (204), such that the overlap section between the first and second edge section of the web, and the sealing strip are sealed together.

13. The longitudinal sealing device (110) according to claim 12, wherein the roller arrangement (210) is a first roller arrangement (210a), and
wherein the longitudinal sealing device (110) further comprises a second roller arrangement (210b) according to claim 10 or 11, the second roller arrangement (210b) being arranged downstream of the first roller arrangement (210a).

14. A roll-fed packaging machine (100) for producing sealed packages of a food product from a web of laminate carton-based packaging material, the roll-fed packaging machine (100) comprising the longitudinal sealing device (110) according to claim 12 or 13.

15. A method (500) for producing a pressure roller, of a roll-fed food packaging machine (100), for applying pressure along a longitudinal sealing section of a tube of a laminate carton-based packaging material, the method (500) comprising:
providing (S502) a roller body made of an elastically deformable material;
depositing (S504) a layer of an adhesion reducing coating by spraying a coating composition on the roller body, wherein the adhesion reducing coating is a ceramic nanocoating comprising ceramic nanoparticles;
curing (S508) the roller body for a period of time; and
repeating step (S504) of depositing a layer of an adhesion reducing coating by spraying a coating composition on the roller body, wherein the adhesion reducing coating is a ceramic nanocoating comprising ceramic nanoparticles, and step (S508) of curing the roller body for a period of time, at least one time.

## Patentansprüche

1. Eine Andrückwalze (300) einer rollengeführten Lebensmittelverpackungsmaschine (100) zum Ausüben von Druck entlang eines Längsversiegelungsabschnitts auf die Innenseite eines Schlauchs (112) aus einem laminierten, kartonbasierten Verpackungsmaterial, wobei die Andruckrolle (300) umfasst:
einen Walzenkörper (302) aus einem elastisch verformbaren Material;
wobei eine Außenfläche (304) des Rollenkörpers (302) mit einer haftungsmindernden Beschichtung versehen ist, wobei die haftungsmindernde Beschichtung eine keramische Nanobeschichtung ist, die keramische Nanopartikel umfasst, so dass im Betrieb das Risiko einer Delaminierung des Verpackungsmaterials verringert wird.

2. Die Andrückwalze (300) nach Anspruch 1, wobei die haftungsmindernde Beschichtung eine Haftungsenergie zwischen 0,1 und 0,3 N/mm aufweist.

3. Die Andrückwalze (300) nach Anspruch 1 oder 2, wobei die haftungsmindernde Beschichtung eine Dicke zwischen 100 µm und 150 µm aufweist.

4. Die Andrückwalze (300) nach einem der Ansprüche 1 bis 3, wobei die haftungsmindernde Beschichtung eine hydrophobe Beschichtung ist.

5. Die Andrückwalze (300) nach einem der Ansprüche 1 bis 4, wobei das elastisch verformbare Material des Walzenkörpers (302) aus einem der Materialien Gummi, Silikon und Elastomer besteht.

6. Die Andrückwalze (300) nach einem der Ansprüche 1 bis 5, wobei das elastisch verformbare Material einen Elastizitätsmodul zwischen 2,4 und 2,8 MPa aufweist.

7. Die Andrückwalze (300) nach einem der Ansprüche 1 bis 6, wobei das elastisch verformbare Material eine Härte zwischen 35 und 50 ShA aufweist.

8. Die Andrückwalze (300) nach einem der Ansprüche 1 bis 7, wobei die Druckwalze (300) bei Temperaturen bis zu 150 °C betreibbar ist.

9. Die Andrückwalze (300) nach einem der Ansprüche 1 bis 8, wobei die Druckwalze (300) bei Vorschubgeschwindigkeiten des Schlauchs zwischen 1 und 2 m/s einsetzbar ist.

10. Eine Walzenanordnung (210) einer rollengeführten Lebensmittelverpackungsmaschine (100) zum Ausüben von Druck entlang eines Längsversiegelungsabschnitts eines Schlauchs (112) aus einem laminierten Verpackungsmaterial auf Kartonbasis, wobei die Walzenanordnung (210) umfasst:
die Andruckwalze (202, 300) gemäß einem der Ansprüche 1 bis 9 und
eine der Druckwalze (202, 300) gegenüberliegend angeordnete Gegendruckwalze (204),
wobei die Druckwalze (202, 300) so ausgebildet ist, dass sie gegen die Gegendruckwalze (204) drückt, um dadurch entlang des Längsversiegelungsabschnitts des dazwischen zugeführten Schlauchs aus Verpackungsmaterial Druck auszuüben.

11. Walzenanordnung (210) nach Anspruch 10, wobei die Gegendruckwalze (204) einen Walzenkörper aus einem starren Material umfasst.

12. Eine Längsversiegelungsvorrichtung (110) nach für eine rollengeführte Lebensmittelverpackungsmaschine (100) zum Versiegeln eines Längsversiegelungsabschnitts eines Schlauchs (112), der aus einer Bahn aus laminiertem Verpackungsmaterial auf Kartonbasis gebildet ist, wobei der Längsversiegelungsabschnitt einen Überlappungsabschnitt zwischen einem ersten und einem zweiten Randabschnitt der Bahn sowie einen entlang des Überlappungsabschnitts aufgebrachten Versiegelungsstreifen umfasst, wobei die Längsversiegelungsvorrichtung (110) umfasst:
die Walzenanordnung (210) gemäß Anspruch 10 oder 11;
wobei im Betrieb die Gegendruckwalze (204) an einer Außenseite (208b) des Schlauchs (112) angeordnet ist und die Druckwalze (202) an einer Innenseite (208a) des Schlauchs (112) angeordnet ist;
wobei im Betrieb die Druckwalze (202) so ausgebildet ist, dass sie gegen die Gegendruckwalze (204) drückt, um dadurch entlang des Längsversiegelungsabschnitts des zwischen der Druckwalze (202) und der Gegendruckwalze (204) zugeführten Schlauchs Druck auszuüben, so dass der Überlappungsabschnitt zwischen dem ersten und dem zweiten Randabschnitt der Bahn und dem Versiegelungsstreifen miteinander versiegelt werden.

13. Längsdichtvorrichtung (110) nach Anspruch 12, wobei die Walzenanordnung (210) eine erste Walzenanordnung (210a) ist, und
wobei die Längsversiegelungsvorrichtung (110) ferner eine zweite Walzenanordnung (210b) gemäß Anspruch 10 oder 11 umfasst, wobei die zweite Walzenanordnung (210b) stromabwärts der ersten Walzenanordnung (210a) angeordnet ist.

14. Eine rollengeführte Verpackungsmaschine (100) zur Herstellung versiegelter Verpackungen für ein Lebensmittelprodukt aus einer Bahn aus laminiertem, kartonbasiertem Verpackungsmaterial, wobei die rollengeführte Verpackungsmaschine (100) die Längsversiegelungsvorrichtung (110) gemäß Anspruch 12 oder 13 umfasst.

15. Verfahren (500) zur Herstellung einer Andruckwalze einer rollengeführten Lebensmittelverpackungsmaschine (100) zum Ausüben von Druck entlang eines Längsversiegelungsabschnitts einer Röhre aus einem laminierten, kartonbasierten Verpackungsmaterial, wobei das Verfahren (500) umfasst:
Bereitstellen (S502) eines Walzenkörpers aus einem elastisch verformbaren Material;
Aufbringen (S504) einer Schicht einer haftungsmindernden Beschichtung durch Aufsprühen einer Beschichtungszusammensetzung auf den Walzenkörper, wobei die haftungsmindernde Beschichtung eine keramische Nanobeschichtung ist, die keramische Nanopartikel umfasst;
Aushärten (S508) des Rollenkörpers über einen bestimmten Zeitraum; und
Wiederholen des Schritts (S504) des Aufbringens einer Schicht einer haftungsmindernden Beschichtung durch Aufsprühen einer Beschichtungszusammensetzung auf den Walzenkörper, wobei die haftungsmindernde Beschichtung eine keramische Nanobeschichtung ist, die keramische Nanopartikel umfasst, und des Schritts (S508) des Aushärtens des Walzenkörpers über einen bestimmten Zeitraum, und zwar mindestens einmal.

## Revendications

1. Rouleau de pression (300) d'une machine d'emballage alimentaire à alimentation par rouleaux (100), destiné à exercer une pression le long d'une section de scellage longitudinale sur la face interne d'un tube (112) d'un matériau d'emballage stratifié à base de carton, le rouleau de pression (300) comprenant :
un corps de rouleau (302) constitué d'un matériau élastiquement déformable ;
dans lequel une surface extérieure (304) du corps de rouleau (302) est pourvue d'un revêtement réduisant l'adhérence, le revêtement réduisant l'adhérence étant un nanorevêtement céramique comprenant des nanoparticules céramiques, de telle sorte que, lors de l'utilisation, le risque de délamination du matériau d'emballage soit réduit.

2. Rouleau de pression (300) selon la revendication 1, dans lequel le revêtement réduisant l'adhérence présente une énergie d'adhérence comprise entre 0,1 et 0,3 N/mm.

3. Rouleau de pression (300) selon la revendication 1 ou 2, dans lequel le revêtement réduisant l'adhérence présente une épaisseur comprise entre 100 µm et 150 µm.

4. Rouleau de pression (300) selon l'une quelconque des revendications 1 à 3, dans lequel le revêtement réduisant l'adhérence est un revêtement hydrophobe.

5. Rouleau de pression (300) selon l'une quelconque des revendications 1 à 4, dans lequel le matériau déformable élastiquement du corps de rouleau (302) est choisi parmi le caoutchouc, le silicone et un élastomère.

6. Rouleau de pression (300) selon l'une quelconque des revendications 1 à 5, dans lequel le matériau déformable élastiquement présente un module d'élasticité compris entre 2,4 et 2,8 MPa.

7. Rouleau de pression (300) selon l'une quelconque des revendications 1 à 6, dans lequel le matériau déformable élastiquement présente une dureté comprise entre 35 et 50 ShA.

8. Rouleau de pression (300) selon l'une quelconque des revendications 1 à 7, dans lequel le rouleau de pression (300) peut fonctionner à des températures allant jusqu'à 150 °C.

9. Rouleau de pression (300) selon l'une quelconque des revendications 1 à 8, dans lequel le rouleau de pression (300) peut fonctionner à des vitesses d'avance du tube comprises entre 1 et 2 m/s.

10. Dispositif à rouleaux (210) d'une machine d'emballage alimentaire à alimentation par rouleaux (100), destiné à exercer une pression le long d'une section de scellage longitudinale d'un tube (112) constitué d'un matériau d'emballage stratifié à base de carton, le dispositif à rouleaux (210) comprenant :
le rouleau de pression (202, 300) selon l'une quelconque des revendications 1 à 9, et
un rouleau de contre-pression (204), disposé en face du rouleau de pression (202, 300),
dans lequel le rouleau de pression (202, 300) est configuré pour appuyer contre ledit rouleau de contre-pression (204) afin d'appliquer ainsi une pression le long de la section de scellage longitudinale du tube de matériau d'emballage alimenté entre eux.

11. Dispositif à rouleaux (210) selon la revendication 10, dans lequel le rouleau de contre-pression (204) comprend un corps de rouleau réalisé en un matériau rigide.

12. Dispositif de scellage longitudinal (110) de type « », d'une machine d'emballage alimentaire alimentée en rouleaux (100), destiné à sceller une section de scellage longitudinale d'un tube (112), formé à partir d'une bande de matériau d'emballage à base de carton laminé, dans lequel la section de scellage longitudinale comprend une section de chevauchement entre une première et une deuxième sections de bord de la bande, et une bande de scellage appliquée le long de ladite section de chevauchement, le dispositif de scellage longitudinal (110) comprenant :
le dispositif à rouleaux (210) selon la revendication 10 ou 11 ;
dans lequel, en utilisation, le rouleau de contre-pression (204) est situé sur une face extérieure (208b) dudit tube (112), et le rouleau de pression (202) est situé sur une face intérieure (208a) dudit tube (112) ;
dans lequel, en utilisation, le rouleau de pression (202) est configuré pour appuyer contre ledit rouleau de contre-pression (204) afin d'appliquer ainsi une pression le long de la section de scellage longitudinale du tube acheminé entre le rouleau de pression (202) et le rouleau de contre-pression (204), de telle sorte que la section de chevauchement entre les première et deuxième sections de bord de la bande, et la bande de scellage soient scellées ensemble.

13. Dispositif de scellage longitudinal (110) selon la revendication 12, dans lequel le dispositif à rouleaux (210) est un premier dispositif à rouleaux (210a), et
dans lequel le dispositif de scellage longitudinal (110) comprend en outre un deuxième agencement de rouleaux (210b) selon la revendication 10 ou 11, le deuxième agencement de rouleaux (210b) étant disposé en aval du premier agencement de rouleaux (210a).

14. Machine d'emballage à alimentation en rouleau (100) destinée à produire des emballages scellés d'un produit alimentaire à partir d'une bande de matériau d'emballage à base de carton laminé, la machine d'emballage à alimentation en rouleau (100) comprenant le dispositif de scellage longitudinal (110) selon la revendication 12 ou 13.

15. Procédé (500) de fabrication d'un rouleau de pression, destiné à une machine d'emballage alimentaire à alimentation par rouleau (100), destiné à appliquer une pression le long d'une section de scellage longitudinale d'un tube en matériau d'emballage à base de carton laminé, le procédé (500) comprenant :
la mise à disposition (S502) d'un corps de rouleau constitué d'un matériau élastiquement déformable ;
le dépôt (S504) d'une couche d'un revêtement réduisant l'adhérence par pulvérisation d'une composition de revêtement sur le corps de rouleau, le revêtement réduisant l'adhérence étant un nanorevêtement céramique comprenant des nanoparticules céramiques ;
le durcissement (S508) du corps de rouleau pendant un certain temps ; et
répéter au moins une fois l'étape (S504) consistant à déposer une couche d'un revêtement réduisant l'adhérence en pulvérisant une composition de revêtement sur le corps de rouleau, le revêtement réduisant l'adhérence étant un nanorevêtement céramique comprenant des nanoparticules céramiques, et l'étape (S508) consistant à durcir le corps de rouleau pendant un certain temps.
